# FASCICULE DE BREVET EUROPEEN

(11) **EP 2 897 918 B1**
(45) Date de publication et mention de la délivrance du brevet: **09.02.2022**
(21) Numéro de dépôt: 13779271.9
(22) Date de dépôt: 20.09.2013
(51) Int. Cl.: C03C 17/36

(54) **SUBSTRAT MUNI D'UN EMPILEMENT A PROPRIETES THERMIQUES ET A COUCHE ABSORBANTE**
SUBSTRAT MIT EINEM STAPEL MIT THERMISCHEN EIGENSCHAFTEN UND EINER ABSORBIERENDEN SCHICHT
SUBSTRATE PROVIDED WITH A STACK HAVING THERMAL PROPERTIES AND AN ABSORBENT LAYER

(30) Priorité: 21.09.2012 FR 1258867
(43) Date de publication de la demande: 29.07.2015
(73) Titulaire: SAINT-GOBAIN GLASS FRANCE, 92400 Courbevoie (FR)
(72) Inventeur: JRIBI, Ramzi, F-75012 Paris (FR); LORENZZI, Jean-Carlos, F-75011 Paris (FR)
(74) Mandataire: Saint-Gobain Recherche
(86) Numéro de dépôt international: PCT/FR2013/052175
(87) Numéro de publication internationale: WO 2014/044984

(56) Documents cités:
- WO-A1-02/48065
- US-A1- 2011 261 442
- US-B1- 6 592 996

## Description

L'invention concerne un vitrage multiple comportant au moins deux substrats, du type substrats verriers, qui sont maintenus ensemble par une structure de châssis, ledit vitrage réalisant une séparation entre un espace extérieur et un espace intérieur, dans lequel au moins une lame de gaz intercalaire est disposée entre les deux substrats.

D'une manière connue, un des substrat peut être revêtu sur une face intérieure en contact avec la lame de gaz intercalaire d'un empilement de couches minces à propriétés de réflexion dans l'infrarouge et/ou dans le rayonnement solaire comportant une seule couche fonctionnelle métallique, en particulier à base d'argent ou d'alliage métallique contenant de l'argent et deux revêtements diélectriques, lesdits revêtements comportant chacun au moins une couche diélectrique, ladite couche fonctionnelle étant disposée entre les deux revêtements diélectriques.

L'invention concerne plus particulièrement l'utilisation de tels substrats pour fabriquer des vitrages d'isolation thermique et/ou de protection solaire. Ces vitrages peuvent être destinés à équiper les bâtiments, en vue notamment de diminuer l'effort de climatisation et/ou d'empêcher une surchauffe excessive (vitrages dits « de contrôle solaire ») et/ou diminuer la quantité d'énergie dissipée vers l'extérieur (vitrages dits « bas émissifs ») entraînée par l'importance toujours croissante des surfaces vitrées dans les bâtiments.

Ces vitrages peuvent par ailleurs être intégrés dans des vitrages présentant des fonctionnalités particulières, comme par exemple des vitrages chauffants ou des vitrages électrochromes.

Un type d'empilement de couches connu pour conférer aux substrats de telles propriétés est constitué d'une couche métallique fonctionnelle à propriétés de réflexion dans l'infrarouge et/ou dans le rayonnement solaire, notamment une couche fonctionnelle métallique à base d'argent ou d'alliage métallique contenant de l'argent.

Dans ce type d'empilement, la couche fonctionnelle se trouve ainsi disposée entre deux revêtements diélectriques comportant chacun en général plusieurs couches qui sont chacune en un matériau diélectrique du type nitrure, et notamment nitrure de silicium ou d'aluminium, ou oxyde. Du point de vu optique, le but de ces revêtements qui encadrent la couche fonctionnelle métallique est « d'antirefléter » cette couche fonctionnelle métallique.

Un revêtement de blocage est toutefois intercalé parfois entre un ou chaque revêtement diélectrique et la couche métallique fonctionnelle, le revêtement de blocage disposé sous la couche fonctionnelle en direction du substrat la protège lors d'un éventuel traitement thermique à haute température, du type bombage et/ou trempe et le revêtement de blocage disposé sur la couche fonctionnelle à l'opposé du substrat protège cette couche d'une éventuelle dégradation lors du dépôt du revêtement diélectrique supérieur et lors d'un éventuel traitement thermique à haute température, du type bombage et/ou trempe.

Pour rappel, le facteur solaire d'un vitrage est le rapport de l'énergie solaire totale entrant dans le local à travers ce vitrage sur l'énergie solaire incidente totale et la sélectivité correspond au rapport de la transmission lumineuse T_{Lvis} dans le visible du vitrage sur le facteur solaire FS du vitrage et est telle que : S = T_{Lvis} / FS.

Actuellement, il existe des empilements de couches minces bas-émissifs à une seule couche fonctionnelle (désignés par la suite sous l'expression « empilement monocouche fonctionnelle »), à base d'argent, présentant une émissivité normale ε_{N} de l'ordre de 2 à 3 %, une transmission lumineuse dans le visible T_{L} de l'ordre de 65 %, une réflexion lumineuse extérieure dans le visible inférieure à 20 % et une sélectivité de l'ordre de 1,3 à 1,35 pour un facteur solaire d'environ 50 % lorsqu'ils sont montés dans un double vitrage classique, comme par exemple en face 3 d'une configuration : 4-16(Ar-90%)-4, constituée de deux feuilles de verre de 4 mm séparée par une lame de gaz intercalaire à 90 % d'argon et 10 % d'air d'une épaisseur de 16 mm, dont l'une des feuilles est revêtue de l'empilement monocouche fonctionnelle : la feuille la plus à l'intérieur du bâtiment lorsque l'on considère le sens incident de la lumière solaire entrant dans le bâtiment ; sur sa face tournée vers la lame de gaz intercalaire.

L'homme du métier sait que positionner l'empilement de couches minces en face 2 du double vitrage (sur la feuille la plus à l'extérieur du bâtiment lorsque l'on considère le sens incident de la lumière solaire entrant dans le bâtiment et sur sa face tournée vers la lame de gaz) lui permettra de diminuer le facteur solaire et d'augmenter ainsi la sélectivité.

Dans le cadre de l'exemple ci-dessus, il est alors possible d'obtenir une sélectivité de l'ordre de 1,5 avec le même empilement monocouche fonctionnelle.

Toutefois cette solution n'est pas satisfaisante pour certaines applications car la réflexion lumineuse dans le visible, et en particulier la réflexion lumineuse dans le visible vue de l'extérieur du bâtiment est alors à un niveau relativement élevé, supérieure à 23 %.

Pour diminuer cette réflexion lumineuse, tout en conservant la réflexion énergétique, voire même en l'augmentant, l'homme du métier sait qu'il peut introduire dans l'empilement, et plus particulièrement à l'intérieur d'un (ou de plusieurs) revêtement(s) diélectrique(s), une (ou plusieurs) couche(s) absorbante(s) dans le visible.

Il est à noter que l'art antérieur connaît déjà l'usage de telles couches absorbantes dans le visible dans des empilements à plusieurs couches fonctionnelles, en particulier de la demande internationale de brevet N° WO 02/48065 qui porte sur l'usage de telles couches absorbantes dans le visible dans un empilement résistant à un traitement thermique du type bombage/trempe.

Toutefois, du fait de la complexité de l'empilement et de la quantité de matière déposée, ces empilements à plusieurs couches fonctionnelles coûtent plus cher à fabriquer que des empilements monocouches fonctionnelles.

Par ailleurs, du fait également de la complexité de cet empilement bicouches fonctionnelles, l'enseignement de ce document n'est pas directement transposable pour la conception d'un empilement monocouche fonctionnelle.

L'art antérieur connaît en outre de la demande internationale de brevet N° WO 2010/072974 un empilement de couches minces monocouche fonctionnelle dans lequel les deux revêtements diélectriques comportent chacun au moins une couche absorbante qui est disposée dans le revêtement diélectrique entre deux couches diélectriques, la matière absorbante des couches absorbantes étant disposée symétriquement de chaque côté de la couche fonctionnelle métallique.

Cet empilement permet d'atteindre une basse réflexion extérieure lumineuse dans le visible, ainsi qu'une coloration acceptable, mais il serait souhaitable de pouvoir conserver ces propriétés tout en obtenant une transmission lumineuse dans le visible plus élevée.

L'art antérieur connaît en outre du brevet américain N° US 6,592,996 un exemple 9 où une couche absorbante unique métallique est déposée directement sur une face d'un substrat et sous une couche d'oxyde. Cette couche présente une épaisseur relativement épaisse et comme une couche d'oxyde est déposée directement sur cette couche métallique, dans la réalité, un part non négligeable (au moins 20 % de l'épaisseur totale) de la partie de la couche métallique située près de la couche d'oxyde se trouve oxydée. Une quantité non négligeable de matière (Ti) perd finalement sa fonction première d'être absorbante, pour devenir antireflet.

Le but de l'invention est de parvenir à remédier aux inconvénients de l'art antérieur, en mettant au point un nouveau type d'empilement de couches monocouche fonctionnelle, empilement qui présente une faible résistance par carré (et donc une faible émissivité), une transmission lumineuse plus élevée et une couleur relativement neutre, en particulier en réflexion côté couches (mai aussi côté opposé : « côté substrat »), et que ces propriétés soient de préférence conservées dans une plage restreinte que l'empilement subisse ou non, un (ou des) traitement(s) thermique(s) à haute température du type bombage et/ou trempe et/ou recuit.

Un autre but important est de proposer un empilement monocouche fonctionnelle qui présente une émissivité faible tout en présentant une faible réflexion lumineuse dans le visible mais une transmission lumineuse dans le visible plus élevée qu'auparavant, ainsi qu'une coloration acceptable, notamment en réflexion extérieure du vitrage multiple, en particulier qui ne soit pas dans le rouge.

Un autre but important est de proposer l'utilisation d'une couche absorbante métallique directement au contact du substrat et de garantir que cette couche reste métallique absorbante une fois l'empilement déposé.

L'invention a ainsi pour objet, dans son acception la plus large, un substrat revêtu sur une face d'un empilement de couches minces à propriétés de réflexion dans l'infrarouge et/ou dans le rayonnement solaire comportant une seule couche fonctionnelle métallique, en particulier à base d'argent ou d'alliage métallique contenant de l'argent et deux revêtements diélectriques, lesdits revêtements comportant chacun au moins une couche diélectrique, ladite couche fonctionnelle étant disposée entre les deux revêtements diélectriques, ledit empilement comportant en outre une couche absorbante unique.

Selon l'invention ladite couche absorbante est une couche métallique présentant une épaisseur physique comprise entre 0,5 nm et 1,5 nm, voire entre 0,6 nm et 1,2 nm et est située directement sur ladite face du substrat et directement sous une couche diélectrique à base de nitrure et ne comportant pas d'oxygène.

En effet, il a été découvert que déposer directement une couche à base de nitrure sur une couche absorbante métallique ne modifie que très peu la nature de la couche métallique à l'interface entre ces deux couches : la couche absorbante métallique reste ainsi métallique sur toute son épaisseur ; il n'est plus nécessaire de prévoir une épaisseur élevée et il n'est plus nécessaire d'anticiper une modification de la nature de la couche absorbante métallique sur une partie de son épaisseur. Après dépôt de l'empilement, il peut être constaté qu'elle est métallique sur toute son épaisseur.

Ladite couche absorbante métallique est, de préférence, en titane. Il a été découvert que ce matériau présente une faible propension à modification lorsque la couche déposée juste au-dessus est une couche à base de nitrure et qu'elle ne comporte pas d'oxygène et en particulier lorsque cette couche est à base de nitrure de silicium sans oxygène : ce matériau peut ainsi être déposé selon une très fine épaisseur sans que sa surface en contact avec un nitrure ne soit profondément affectée (nitrurée).

Ladite couche absorbante présente, de préférence, une épaisseur comprise entre 0,5 et 1,5 nm, en incluant ces valeurs, voire entre 0,6 et 1,2 nm, voire entre 0,6 et 1,1 nm, en incluant ces valeurs, afin de ne pas trop pénaliser la transmission lumineuse.

Par « revêtement » au sens de la présente invention, il faut comprendre qu'il peut y avoir une seule couche ou plusieurs couches de matériaux différents à l'intérieur du revêtement.

Comme habituellement, par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5.

Par « couche absorbante » au sens de la présente invention, il faut comprendre que la couche est un matériau présentant un rapport n/K sur toute la plage de longueur d'onde du visible (de 380 nm à 780 nm) entre 0 et 5 en excluant ces valeurs et présentant une résistivité électrique à l'état massif (telle que connue dans la littérature) supérieure à 10⁻⁵ Ω.cm.

Il est rappelé que n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée identique pour n et pour k.

Par « couche absorbante métallique » au sens de la présente invention, il faut comprendre que la couche est absorbante comme indiquée ci-avant et qu'elle ne comporte pas d'atome d'oxygène, ni d'atome d'azote.

Dans une version particulière de l'invention au moins un substrat comporte sur au moins une face en contact avec une lame de gaz intercalaire un revêtement antireflet qui est en vis-à-vis par rapport à ladite lame de gaz intercalaire avec un empilement de couches minces à propriétés de réflexion dans l'infrarouge et/ou dans le rayonnement solaire.

Cette version permet d'atteindre une sélectivité encore plus grande, grâce à une augmentation significative de la transmission lumineuse et à une augmentation moindre du facteur solaire du vitrage multiple.

L'épaisseur physique de ladite couche métallique fonctionnelle est de préférence comprise entre 15 nm et 20 nm, en incluant ces valeurs, afin d'atteindre une émissivité < 2,5 %.

Dans une autre version particulière de l'invention, ledit revêtement diélectrique disposé ou situé entre la face du substrat et ladite couche fonctionnelle métallique comporte une couche haut indice en un matériau présentant un indice de réfraction compris entre 2,3 et 2,7, cette couche étant de préférence à base d'oxyde. Les valeurs d'indice de réfraction indiquées dans le présent document sont les valeurs mesurées comme habituellement à la longueur d'onde de 550 nm.

Cette couche haut indice présente, de préférence une épaisseur physique comprise entre 5 et 15 nm.

Cette couche haut indice permet de maximaliser la haute transmission lumineuse dans le visible de l'empilement et a une action favorable sur l'obtention de couleurs neutres, tant en transmission qu'en réflexion.

L'épaisseur physique de ladite couche diélectrique à base de nitrure est, de préférence, comprise entre 10 et 20 nm, cette couche étant de préférence encore à base de nitrure de silicium Si₃N₄. Avec cette épaisseur et de préférence avec cette nature, la protection de la couche absorbante métallique est très efficace.

Dans une autre version particulière de l'invention, la couche fonctionnelle est déposée directement sur un revêtement de sous-blocage disposé entre la couche fonctionnelle et le revêtement diélectrique sous-jacent à la couche fonctionnelle et/ou la couche fonctionnelle est déposée directement sous un revêtement de sur-blocage disposé entre la couche fonctionnelle et le revêtement diélectrique sus-jacent à la couche fonctionnelle et le revêtement de sous-blocage et/ou le revêtement de sur-blocage comprend une couche fine à base de nickel ou de titane présentant une épaisseur physique e' telle que 0,2 nm ≤ e' ≤ 2,5 nm.

Dans une autre version particulière de l'invention, la dernière couche du revêtement diélectrique sus-jacent, celle la plus éloignée du substrat, est à base d'oxyde, déposée de préférence sous stœchiométrique, et notamment est à base d'oxyde de titane (TiOₓ) ou à base d'oxyde mixte de zinc et d'étain (SnZnOₓ).

L'empilement peut ainsi comporter une dernière couche (« overcoat » en anglais), c'est-à-dire une couche de protection, déposée de préférence sous stoechiométrique. Cette couche se retrouve oxydée pour l'essentiel stœchiométriquement dans l'empilement après le dépôt.

L'invention concerne en outre l'utilisation d'une couche absorbante unique pour réaliser un vitrage multiple comportant au moins deux substrats qui sont maintenus ensemble par une structure de châssis, ledit vitrage réalisant une séparation entre un espace extérieur et un espace intérieur, dans lequel au moins une lame de gaz intercalaire est disposée entre les deux substrats, un substrat étant selon l'invention, afin que ledit vitrage présente une sélectivité s > 1,45 tout en ayant une transmission lumineuse T_{L} > 55 %, voire afin que ledit vitrage présente une sélectivité s ≥ 1,5 tout en ayant une transmission lumineuse T_{L} ≥ 57 %.

De préférence, l'empilement selon l'invention est positionné en face 2 du vitrage.

L'invention concerne en outre un vitrage multiple comportant au moins deux substrats qui sont maintenus ensemble par une structure de châssis, ledit vitrage réalisant une séparation entre un espace extérieur et un espace intérieur, dans lequel au moins une lame de gaz intercalaire est disposée entre les deux substrats, un substrat étant selon l'invention.

De préférence, un seul substrat du vitrage multiple comportant au moins deux substrats ou du vitrage multiple comportant au moins trois substrats est revêtu sur une face intérieure en contact avec la lame de gaz intercalaire d'un empilement de couches minces à propriétés de réflexion dans l'infrarouge et/ou dans le rayonnement solaire.

Le vitrage selon l'invention incorpore au moins le substrat porteur de l'empilement selon l'invention, éventuellement associé à au moins un autre substrat. Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Le vitrage selon l'invention peut présenter une structure feuilletée, associant notamment au moins deux substrats rigides du type verre par au moins une feuille de polymère thermoplastique, afin de présenter une structure de type verre/empilement de couches minces/feuille(s)/verre / lame de gaz intercalaire / feuille de verre. Le polymère peut notamment être à base de polyvinylbutyral PVB, éthylène vinylacétate EVA, polyéthylène téréphtalate PET, polychlorure de vinyle PVC.

Les substrats des vitrages selon l'invention sont aptes à subir un traitement thermique sans dommage pour l'empilement de couches minces. Ils sont donc éventuellement bombés et/ou trempés.

Avantageusement, la présente invention permet ainsi de réaliser un empilement de couches minces monocouche fonctionnelle présentant, déposé sur un substrat transparent, une transmission lumineuse dans le visible T_{L} > 60 % et une réflexion extérieure dans le visible R_{g} (c'est-à-dire côté verre) inférieure à 19 % avec des couleurs neutres en réflexion extérieure.

Dans une configuration de double vitrage, la présente invention permet d'obtenir une sélectivité S élevée (S >1,45), et une esthétique favorable (T_{Lvis} ≥ 55 %, R_{Lvis} extérieure < 22 %, couleurs neutres en réflexion extérieure).

L'empilement monocouche fonctionnelle selon l'invention coûte moins cher à produire qu'un empilement bicouches fonctionnelles présentant des caractéristiques similaires (T_{Lvis}, R_{Lvis} et couleurs neutres en réflexion extérieure). Il coûte aussi moins cher à produire qu'un empilement monocouche fonctionnel qui comporte directement sur le substrat une couche absorbante métallique dont une partie de l'épaisseur n'est pas métallique (et donc n'est pas absorbante) finalement dans l'empilement après le dépôt de toutes les couches.

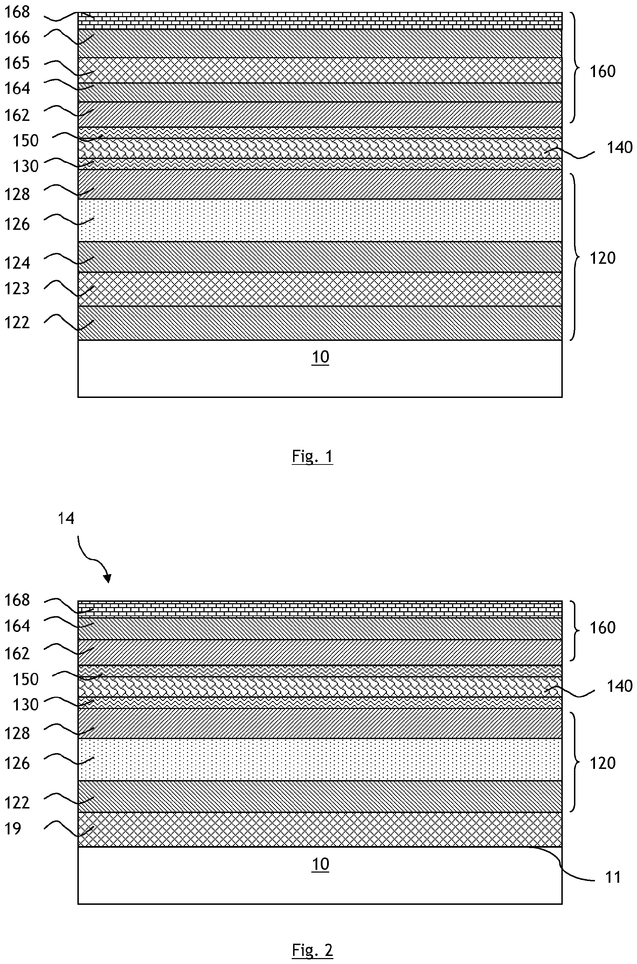

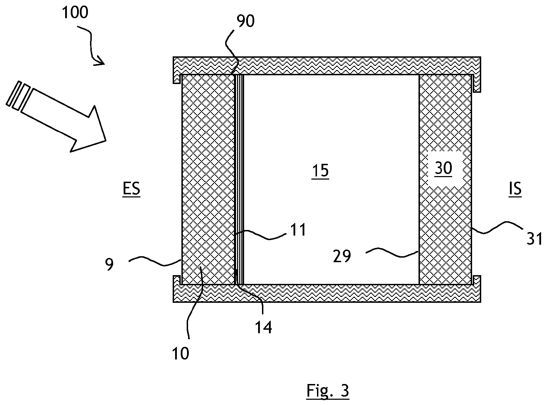

Les détails et caractéristiques avantageuses de l'invention ressortent des exemples non limitatifs suivants, illustrés à l'aide des figures ci-jointes illustrant :
- en figure 1, un empilement monocouche fonctionnelle de l'art antérieur, la couche fonctionnelle étant pourvue d'un revêtement de sous-blocage et d'un revêtement de sur-blocage ;
- en figure 2, un empilement monocouche fonctionnelle selon l'invention, la couche fonctionnelle étant déposée directement sur un revêtement de sous-blocage et directement sous un revêtement de sur-blocage ; et
- en figure 3, une solution de double vitrage incorporant un empilement monocouche fonctionnelle.

Dans ces figures, les proportions entre les épaisseurs des différentes couches ou des différents éléments ne sont pas rigoureusement respectées afin de faciliter leur lecture.

La figure 1 illustre une structure d'un empilement monocouche fonctionnelle de l'art antérieur déposé sur un substrat 10 verrier, transparent, dans laquelle la couche fonctionnelle 140 unique, en particulier à base d'argent ou d'alliage métallique contenant de l'argent, est disposée entre deux revêtements diélectriques, le revêtement diélectrique sous-jacent 120 situé en dessous de la couche fonctionnelle 140 en direction du substrat 10 et le revêtement diélectrique sus-jacent 160 disposé au-dessus de la couche fonctionnelle 140 à l'opposé du substrat 10.

Ces deux revêtements diélectrique 120, 160, comportent chacun au moins deux couches diélectriques 122, 124, 126, 128 ; 162, 164, 166.

Eventuellement, d'une part la couche fonctionnelle 140 peut être déposée directement sur un revêtement de sous-blocage 130 disposé entre le revêtement diélectrique sous-jacent 120 et la couche fonctionnelle 140 et d'autre part la couche fonctionnelle 140 peut être déposée directement sous un revêtement de sur-blocage 150 disposé entre la couche fonctionnelle 140 et le revêtement diélectrique sus-jacent 160.

Les couches de sous et/ou sur-blocage, bien que déposées sous forme métalliques et présentées comme étant des couches métalliques, sont dans la pratique des couches oxydées car leur fonction première est de s'oxyder au cours du dépôt de l'empilement afin de protéger la couche fonctionnelle.

Ce revêtement diélectrique 160 peut se terminer par une couche de protection optionnelle 168, en particulier à base d'oxyde, notamment sous stœchiométrique en oxygène.

Lorsqu'un empilement monocouche fonctionnelle est utilisé dans un vitrage multiple 100 de structure double vitrage, comme illustré en figure 3, ce vitrage comporte deux substrats 10, 30 qui sont maintenus ensemble par une structure de châssis 90 et qui sont séparés l'un de l'autre par une lame de gaz intercalaire 15.

Le vitrage réalise ainsi une séparation entre un espace extérieur ES et un espace intérieur IS.

L'empilement peut être positionné en face 2 (sur la feuille la plus à l'extérieur du bâtiment en considérant le sens incident de la lumière solaire entrant dans le bâtiment et sur sa face tournée vers la lame de gaz).

La figure 3 illustre ce positionnement (le sens incident de la lumière solaire entrant dans le bâtiment étant illustré par la double flèche) en face 2 d'un empilement de couches minces 14 positionné sur une face intérieure 11 du substrat 10 en contact avec la lame de gaz intercalaire 15, l'autre face 9 du substrat 10 étant en contact avec l'espace extérieur ES.

Toutefois, il peut aussi être envisagé que dans cette structure de double vitrage, l'un des substrats présente une structure feuilletée ; toutefois, il n'y a pas de confusion possible car dans une telle structure, il n'y a pas de lame de gaz intercalaire.

Quatre exemples ont été réalisés, numérotés 1 à 4.

L'exemple 1 a été réalisé en suivant l'enseignement de la demande internationale de brevet N° WO 2010/072974 : les deux revêtements diélectriques 120, 160 comportent chacun une couche absorbante 123, 165 qui est disposée dans le revêtement diélectrique entre deux couches diélectriques 122, 124; 164, 166, la matière absorbante des couches absorbantes 123, 165 étant disposée symétriquement de chaque côté de la couche fonctionnelle métallique 140.

Les deux couches diélectrique 122, 124; 164,166 qui encadrent chaque couche absorbante sont à base de nitrure de silicium et une couche haut indice 126 est disposée au-dessus de la couche 124, ladite couche haut indice 126 étant en contact avec une couche de mouillage 128 sus-jacente.

La couche haut indice est à base d'oxyde ; Elle présente un indice de réfraction compris entre 2,3 et 2,7, et qui est ici précisément de 2,46.

Dans cet empilement, la couche de mouillage 128 en oxyde de zinc dopé à l'aluminium ZnO:Al (déposé à partir d'une cible métallique constitué de zinc dopé à 2 % en masse d'aluminium) permet d'améliorer la cristallisation de l'argent, ce qui améliore sa conductivité.

Le revêtement diélectrique sus-jacent 160 comprend une couche diélectrique 162 en oxyde de zinc dopé à l'aluminium ZnO:Al (déposé à partir d'une cible métallique constitué de zinc dopé à 2 % en masse d'aluminium) et une couche de protection 168 à base d'oxyde.

Les couches en nitrure de silicium 122, 124; 164,166 sont en nitrure de silicium Si₃N₄ et sont déposées à partir d'une cible métallique dopée à 8 % en masse d'aluminium.

Les couches absorbantes 123, 165 sont métalliques, en titane.

Pour tous les exemples ci-après, les conditions de dépôt des couches sont :

| Couche | Cible employée | Pression de dépôt | Gaz |
|---|---|---|---|
| Si₃N₄ | Si:Al à 92:8 % wt | 1,5.10⁻³ mbar | Ar /(Ar + N2) à 45 % |
| TiO₂ | TiOₓ | 2.10⁻³ mbar | Ar /(Ar + 02) à 90 % |
| Ti | Ti | 7.10⁻³ mbar | Ar à 100 % |
| ZnO | Zn:Al à 98:2 % wt | 2.10⁻³ mbar | Ar /(Ar + 02) à 52 % |
| NiCr | NiCr à 80:20 wt | 2.10⁻³ mbar | Ar à 100 % |
| Ag | Ag | 2.10⁻³ mbar | Ar à 100 % |

Les couches déposées peuvent ainsi être classées en quatre catégories :
i- couches en matériau diélectrique, présentant un rapport n/k sur toute la plage de longueur d'onde du visible supérieur en 5 : Si₃N₄, TiO₂, ZnO
ii- couches en matériau absorbant, présentant un rapport 0 < n/k < 5 sur toute la plage de longueur d'onde du visible et une résistivité électrique à l'état massif qui est supérieure à 10⁻⁵ Ω.cm : Ti
iii- couches fonctionnelles métalliques en matériau à propriétés de réflexion dans l'infrarouge et/ou dans le rayonnement solaire : Ag.
iv- couches de sur-blocage et sous-blocage destinées à protéger la couche fonctionnelle contre une modification de sa nature lors du dépôt de l'empilement ; leur influence sur les propriétés optiques et énergétiques est en général ignoré.

Il a été constaté que l'argent présente aussi un rapport 0 < n/k < 5 sur toute la plage de longueur d'onde du visible, mais sa résistivité électrique à l'état massif est inférieure à 10⁻⁵ Ω.cm.

Dans tous les exemples ci-après l'empilement de couches minces est déposé sur un substrat en verre sodo-calcique clair d'une épaisseur de 4 mm de la marque Planilux, distribué par la société SAINT-GOBAIN.

Pour ces substrats,
- R indique : la résistance par carré de l'empilement, en ohms par carré ;
- T_{L} indique : la transmission lumineuse dans le visible en %, mesurée selon l'illuminant D65 à 2° ;
- a_{T}* et b_{T}* indiquent : les couleurs en transmission a* et b* dans le système LAB mesurées selon l'illuminant D65 à 2° ;
- R_{c} indique : la réflexion lumineuse dans le visible en %, mesurée selon l'illuminant D65 à 2°, côté du substrat revêtu de l'empilement de couches minces ;
- a_{c}* et b_{c}* indiquent : les couleurs en réflexion a* et b* dans le système LAB mesurées selon l'illuminant D65 à 2°, côté du substrat revêtu ;
- R_{g} indique : la réflexion lumineuse dans le visible en %, mesurée selon l'illuminant D65 à 2°, côté du substrat nu ;
- a_{g}* et b_{g}* indiquent : les couleurs en réflexion a* et b* dans le système LAB mesurées selon l'illuminant D65 à 2°, côté du substrat nu.

En outre, pour ces exemples, lorsque le substrat porteur de l'empilement est intégré dans un double vitrage, celui-ci présente la structure : 4-16-4 (Ar - 90%), c'est-à-dire que deux substrats en verre, chacun d'une épaisseur de 4 mm sont séparés par une lame de gaz constituée à 90 % d'argon et 10% d'air présentant une épaisseur de 16 mm.

Tous ces exemples ont permis d'atteindre, dans cette configuration de double vitrage, un coefficient U, ou coefficient K, calculé selon la norme EN 673, de l'ordre de 1,0 W.m⁻².°K⁻¹ (c'est le coefficient de transmission thermique à travers le vitrage ; il désigne la quantité de chaleur traversant le substrat en régime stationnaire, par unité de surface et pour une différence de température unitaire entre la face du vitrage en contact avec l'espace extérieur et la face du vitrage en contact avec l'espace intérieur).

Pour ces double-vitrages,
- FS indique : le facteur solaire, c'est-à-dire le rapport, en pourcent, de l'énergie solaire totale entrant dans le local à travers le vitrage sur l'énergie solaire incidente totale ;
- s indique : la sélectivité correspondant au rapport de la transmission lumineuse T_{L} dans le visible sur le facteur solaire FS tel que : S = T_{Lvis} / FS ;
- T_{L} indique : la transmission lumineuse dans le visible en %, mesurée selon l'illuminant D65 à 2° ;
- a_{T}* et b_{T}* indiquent : les couleurs en transmission a* et b* dans le système LAB mesurées selon l'illuminant D65 à 2° ;
- Rₑ indique : la réflexion lumineuse extérieure dans le visible en %, mesurée selon l'illuminant D65 à 2°, côté espace extérieur ES ;
- aₑ* et bₑ* indiquent : les couleurs en réflexion extérieure a* et b* dans le système LAB mesurées selon l'illuminant D65 à 2°, côté espace extérieur ES;
- Rᵢ indique : la réflexion lumineuse intérieure dans le visible en %, mesurée selon l'illuminant D65 à 2°, côté espace intérieur IS ;
- aᵢ* et bᵢ* indiquent : les couleurs en réflexion intérieure a* et b* dans le système LAB mesurées selon l'illuminant D65 à 2°, côté espace intérieur IS.

Un exemple N° 1 a été réalisé selon la structure d'empilement illustré en figure 1, avec deux couches absorbantes 123 et 165 et une couche de protection optionnelle 168, mais sans revêtement de sous-blocage 130.

Le tableau 1 ci-après illustre les épaisseurs géométriques ou physiques (et non pas les épaisseurs optiques) en nanomètres de chacune des couches de l'exemple 1 :

**Tableau 1**

| Couche | Matériau | Ex. 1 |
|---|---|---|
| 168 | TiO₂ | 1 |
| 166 | Si₃N₄:Al | 25,1 |
| 165 | Ti | 2,1 |
| 164 | Si₃N₄:Al | 25,1 |
| 162 | ZnO:Al | 9 |
| 150 | NiCr | 0,2 |
| 140 | Ag | 18,1 |
| 128 | ZnO:Al | 5 |
| 126 | TiO₂ | 12 |
| 124 | Si₃N₄:Al | 13,8 |
| 123 | Ti | 2,1 |
| 122 | Si₃N₄:Al | 13,8 |

Le tableau 2 ci-après résume les principales caractéristiques optiques et énergétique de cet exemple 1, respectivement lorsque l'on considère uniquement le substrat 10 seul et lorsqu'il est monté en double vitrage, en face 2, F2, comme en figure 3.

**Tableau 2**

| | R | T_{L} | a_{T}* | b_{T}* | R_{c} | a_{c}* | b_{c}* | R_{g} | a_{g}* | b_{g}* |
|---|---|---|---|---|---|---|---|---|---|---|
| 10 | 1,9 | 40,89 | -3,49 | 4,74 | 16,41 | -0,33 | -25,8 | 18,94 | 4,06 | -5,81 |
| | | FS | s | T_{L} | Rₑ | Rᵢ | | | | |
| F2 | | 27,26 | 1,37 | 37,38 | 20,35 | 21,86 | | | | |

Ainsi, comme visible dans ce tableau 2, la réflexion lumineuse extérieure Rₑ du vitrage est de l'ordre de 20 % car la reflexion côté verre du susbtrat est inférieure à 19 % et la couleur en réflexion extérieure est relativement neutre.

Le facteur solaire relativement faible pourrait permettre d'atteindre une sélectivité élevée mais comme la transmission lumineuse dans le visible T_{L} est trop basse, finalement, la sélectivité est relativement faible.

Il est alors souhaitable d'obtenir une transmission lumineuse plus élevée, avec un facteur solaire relativement faible, afin d'augmenter la sélectivité tout en conservant une réflexion extérieure Rₑ à une valeur faible, de l'ordre de 20 %, voire moins en double vitrage, ce qui équivaut à une réflexion exterieur du substrat seul, côté verre, à une valeur égale ou inférieure à 19 %.

Un exemple 2 a ensuite été réalisés sur la base de l'empilement illustré en figure 2, en suivant l'enseignement de l'invention et en disposant ainsi dans l'empilement une seule couche absorbante métallique, ici en titane Ti, la couche 19, directement au contact du susbtrat, puis directement sous une couche diélectrique 122 à base de nitrure et ne comportant pas d'oxygène.

Ici la couche diélectrique 122 est à base de nitrure de silicium mais ne peut pas être à base d'oxynitrure de silicium car un tel matériau comporte de l'oxygène.

Le tableau 3 ci-après illustre les épaisseurs géométriques en nanomètres de chacune des couches de l'exemple 2 :

**Tableau 3**

| Couche | Matériau | Ex. 2 |
|---|---|---|
| 168 | TiO₂ | 1 |
| 164 | Si₃N₄:Al | 44 |
| 162 | ZnO:Al | 9 |
| 150 | NiCr | 0,2 |
| 140 | Ag | 18,1 |
| 128 | ZnO:Al | 5 |
| 126 | TiO₂ | 12 |
| 122 | Si₃N₄:Al | 18,6 |
| 19 | Ti | 0,8 |

Cet exemple 2 est ainsi sensiblement identique à l'exemple 1 avec comme principale différence : les deux couches absorbante 123 et 165 de 2,1 nanomètres chacune de l'exemple 1 ont été remplacées par l'unique couche absorbante 19 d'une épaisseur de 0,8 nm.

Le tableau 4 ci-après résume les principales caractéristiques optiques et énergétique de cet exemple 2, respectivement lorsque l'on considère uniquement le substrat 10 seul et lorsque celui-ci est monté en double vitrage F2, en face 2, comme en figure 3. Ce tableau présente la même structure que le tableau 2.

**Tableau 4**

| | R | T_{L} | a_{T}* | b_{T}* | R_{c} | a_{c}* | b_{c}* | R_{g} | a_{g}* | b_{g}* |
|---|---|---|---|---|---|---|---|---|---|---|
| 10 | 1,9 | 62,78 | -3,39 | 6,31 | 22,03 | 4,74 | -13,8 | 18,29 | 2,59 | -5,89 |
| | | FS (%) | s | T_{L} | Rₑ | Rᵢ | | | | |
| F2 | | 38,35 | 1,5 | 57,66 | 21,2 | 26,5 | | | | |

Comme visible dans ce tableau 4, la réflexion lumineuse extérieure Rₑ est très satisfaisante lorsque l'empilement est positionné en face 2 : elle est de l'ordre de 21 %.

De même la couleur vue de l'extérieur, est peu différente de celle de l'exemple 1 et reste neutre.

Le tableau 5 ci-après illustre les plages des épaisseurs physiques préférées en nanomètres, sur la base de l'exemple 2 :

**Tableau 5**

| Couche | Matériau | Plages préférées | Plages plus préférées |
|---|---|---|---|
| 168 | TiO₂ | 0,5-2 | 0,5-2 |
| 164 | Si₃N₄:Al | 35-50 | 35-50 |
| 162 | ZnO:Al | 5-10 | 5-10 |
| 150 | NiCr | 0,2-2,5 | 0,2-2,5 |
| 140 | Ag | 15-20 | 15-20 |
| 128 | ZnO:Al | 4-8 | 4-8 |
| 124 | TiO₂ | 5-15 | 5-15 |
| 122 | Si₃N₄:Al | 10-20 | 10-20 |
| 19 | Ti | 0,5-1,5 | 0,6-1,2 |

Le tableau 6 ci-après résume les principales caractéristiques optiques et énergétique que l'on peut viser respectivement avec ces plages préférées et des plages plus préférées, respectivement lorsque l'on considère uniquement le substrat 10 et lorsque celui-ci est monté en double vitrage F2, en face 2, comme en figure 3.

**Tableau 6**

| | T_{L} | | R_{g} |
|---|---|---|---|
| 10 préféré | > 60 | | < 19 |
| 10 plus préféré | > 62 | | < 19 |

| | T_{L} | FS (%) | s |
|---|---|---|---|
| F2 préféré | > 55 | < 40 | > 1,45 |
| F2 plus préféré | ≥ 57 | ≤ 39 | ≥ 1,5 |

Comme visible dans ce tableau 6, la réflexion lumineuse du substrat seul, revêtu de l'empilement, côté verre, R_{g}, est très satisfaisante: elle est inférieure à 19 %.

La transmission lumineuse du substrat revêtu de l'empilement est élevée ; celle du double vitrage l'est aussi en conséquence.

Même si le facteur solaire n'est pas très bas, la sélectivité est élevée.

Par ailleurs, la couleur vue de l'extérieur, est peu différente de celle de l'exemple 1 et reste neutre.

Deux autres exemples, les exemples 3 et 4, ont été réalisés sur la base de l'exemple 2 pour illustrer ce qui se passe lorsque la couche absorbante 19 est en contact avec une couche d'oxyde, respectivement pour l'exemple 3 lorsque la couche diélectrique 122 est remplacée par une couche en ZnO:Al, d'indice identique (et d'épaisseur optique identique) et pour l'exemple 4 lorsque la couche diélectrique 122 est supprimée et que la couche haut indice 126 est épaissie (afin que le revêtement diélectrique 120 sous-jacent à la couche fonctionnelle conserve la même épaisseur optique).

Les exemples 3 et 4 sont ainsi identiques à l'exemple 2 sauf en ce que :
- pour l'exemple 3, la couche diélectrique 122 de l'exemple 2 est remplacée par une couche diélectrique en même matériau que les couches 128 et 162, en l'occurrence du ZnO:Al, cette couche présentant une épaisseur physique de 18,6 nm ;
- pour l'exemple 4, la couche diélectrique 122 de l'exemple 2 est supprimée et la couche haut indice 126, en TiO₂, est épaissie afin de présenter une épaisseur physique totale de 27,1 nm.

Les tableaux 7 et 8 ci-après résume les principales caractéristiques optiques et énergétique respectivement de ces exemples 3 et 4, lorsque l'on considère uniquement le substrat 10 seul et lorsque celui-ci est monté en double vitrage F2, en face 2, comme en figure 3. Ces tableau présentent chacun la même structure que le tableau 4.

**Tableau 7 - Exemple 3**

| | R | T_{L} | a_{T}* | b_{T}* | R_{c} | a_{c}* | b_{c}* | R_{g} | a_{g}* | b_{g}* |
|---|---|---|---|---|---|---|---|---|---|---|
| 10 | 1,9 | 61,5 | -2,7 | 5,0 | 24,2 | 3,1 | -11,1 | 22,1 | 0,8 | -3,4 |
| | | FS (%) | s | T_{L} | Rₑ | Rᵢ | | | | |
| F2 | | 37,8 | 1,5 | 56,5 | 25,3 | 28,4 | | | | |

Comme visible dans ce tableau 7, la transmission lumineuse du substrat revêtu est dégradée par le contact Ti/ZnO puisqu'elle diminue de plus de 1 % par rapport à celle de l'exemple 2.

De plus, la réflexion lumineuse côté verre R_{g} du substrat revêtu est aussi dégradée puisqu'elle augmente de près de 4 % .

Ainsi, si cet exemple 3 est utilisé dans un double vitrage, avec l'empilement positionné en face 2, certes la sélectivité est conservée mais la transmission lumineuse T_{L} est moins élevée que pour l'exemple 2 (diminution de 1,5 %) et la réflexion lumineuse extérieure Rₑ augmente (de 3,7 %).

Même si la couleur du double vitrage vue de l'extérieur, est peu différente de celle de l'exemple 2 et reste acceptable, la plus faible transmission lumineuse et la plus haute réflexion extérieure ne sont pas acceptables au regard du but poursuivi.

**Tableau 8 - Exemple 4**

| | R | T_{L} | a_{T}* | b_{T}* | R_{c} | a_{c}* | b_{c}* | R_{g} | a_{g}* | b_{g}* |
|---|---|---|---|---|---|---|---|---|---|---|
| 10 | 1,9 | 64,8 | -4,2 | 8,9 | 19,1 | 7,6 | -19,3 | 14,4 | 6,1 | -10,5 |
| | | FS (%) | s | T_{L} | Rₑ | Rᵢ | | | | |
| F2 | | 38,5 | 1,5 | 58,5 | 15,8 | 24,0 | | | | |

Comme visible dans ce tableau 8, la transmission lumineuse du substrat revêtu est améliorée par le contact Ti/TiO₂ puisqu'elle augmente de 2 % par rapport à celle de l'exemple 2.

De plus, la réflexion lumineuse côté verre R_{g} du substrat revêtu est aussi améliorée puisqu'elle diminue de près de 4 % .

Toutefois, la couleur en transmission du substrat revêtu est dégradée, en particulier en raison de la haute valeur de b*ₜ.

En outre la couleur en réflexion du substrat revêtu côté non revêtu est dégradée en raison des hautes valeurs (en valeurs absolues) de a*_{g} et b*_{g}.

La couleur en réflexion du substrat revêtu côté revêtu est aussi dégradée en raison des hautes valeurs (en valeurs absolues) de a*_{c} et b*_{c}.

Même si la plus haute transmission lumineuse et la plus faible réflexion extérieure de l'exemple 4 par rapport à l'exemple 2 seraient acceptables au regard du but poursuivi, la couleur du double vitrage vue de l'extérieur est inacceptable.

Avec l'invention il est possible de combiner une forte sélectivité, une faible émissivité et une faible réflexion lumineuse extérieure, avec un empilement comportant une seule couche métallique fonctionnelle en argent ou à base d'argent, tout en conservant une esthétique convenable (la T_{L} est supérieure à 60 % et les couleurs sont neutres en réflexion).

L'utilisation d'une seule couche absorbante simplifie la fabrication et diminue le coût par rapport à l'utilisation de deux couches absorbantes ; d'autant plus que l'épaisseur de cette couche absorbante unique est inférieure à la somme de l'épaisseur des deux couches absorbantes nécessaires dans l'art antérieur.

En outre, la résistance mécanique de l'empilement selon l'invention est très bonne. Par ailleurs, la tenue chimique générale de cet empilement est globalement bonne.

En outre, il peut être prévu, bien que cela ce soit pas illustré, qu'un substrat 30 comporte sur au moins une face 29 en contact avec la lame de gaz intercalaire 15 et qui ne comporte pas d'empilement de couches minces à propriétés de réflexion dans l'infrarouge et/ou dans le rayonnement solaire, un revêtement antireflet qui est en vis-à-vis par rapport à ladite lame de gaz intercalaire 15 avec l'empilement de couches minces 14 à propriétés de réflexion dans l'infrarouge et/ou dans le rayonnement solaire.

Le but de cette insertion d'un revêtement antireflet dans une structure de double vitrage est de permettre d'obtenir une transmission lumineuse élevée et un facteur solaire élevé.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat (10) revêtu sur une face (11) d'un empilement de couches minces (14) à propriétés de réflexion dans l'infrarouge et/ou dans le rayonnement solaire comportant une seule couche fonctionnelle métallique (140), en particulier à base d'argent ou d'alliage métallique contenant de l'argent et deux revêtements diélectriques (120, 160), lesdits revêtements comportant chacun au moins une couche diélectrique (122, 164), ladite couche fonctionnelle (140) étant disposée entre les deux revêtements diélectriques (120, 160), ledit empilement comportant en outre une couche absorbante (19) unique, ***caractérisé en ce que*** ladite couche absorbante (19) est une couche métallique présentant une épaisseur physique comprise entre 0,5 nm et 1,5 nm, voire entre 0,6 nm et 1,2 nm et est située directement sur ladite face (11) et directement sous une couche diélectrique à base de nitrure et ne comportant pas d'oxygène.

2. Substrat (10) selon la revendication 1, ***caractérisé en ce que*** ladite couche absorbante (19) métallique est en titane.

3. Substrat (10) selon la revendication 1 ou 2, ***caractérisé en ce que*** ledit revêtement diélectrique (120) disposé entre la face (11) et ladite couche fonctionnelle métallique (140) comporte une couche haut indice (126) en un matériau présentant un indice de réfraction compris entre 2,3 et 2,7, cette couche étant de préférence à base d'oxyde.

4. Substrat (10) selon la revendication 3, ***caractérisé en ce que*** ladite couche haut indice (126) présente une épaisseur physique comprise entre 5 et 15 nm.

5. Substrat (10) selon l'une quelconque des revendications 1 à 4, ***caractérisé en ce que*** l'épaisseur physique de ladite couche diélectrique à base de nitrure est comprise entre 10 et 20 nm, cette couche étant de préférence à base de nitrure de silicium Si₃N₄.

6. Substrat (10) selon l'une quelconque des revendications 1 à 5, ***caractérisé en ce que*** ladite couche fonctionnelle (140) est déposée directement sur un revêtement de sous-blocage (130) disposé entre la couche fonctionnelle (140) et le revêtement diélectrique (120) sous-jacent à la couche fonctionnelle et/ou ladite couche fonctionnelle (140) est déposée directement sous un revêtement de sur-blocage (150) disposé entre la couche fonctionnelle (140) et le revêtement diélectrique (160) sus-jacent à la couche fonctionnelle ***et en ce que*** le revêtement de sous-blocage (130) et/ou le revêtement de sur-blocage (150) comprend une couche fine à base de nickel ou de titane présentant une épaisseur physique e' telle que 0,2 nm ≤ e' ≤ 2,5 nm.

7. Substrat (10) selon l'une quelconque des revendications 1 à 6, ***caractérisé en ce que*** la dernière couche (168) du revêtement diélectrique sus-jacent (160), celle la plus éloignée du substrat, est à base d'oxyde, déposée de préférence sous stœchiométrique, et notamment est à base d'oxyde de titane (TiOₓ) ou à base d'oxyde mixte de zinc et d'étain (SnZnOₓ).

8. Vitrage multiple (100) comportant au moins deux substrats (10, 30) qui sont maintenus ensemble par une structure de châssis (90), ledit vitrage réalisant une séparation entre un espace extérieur (ES) et un espace intérieur (IS), dans lequel au moins une lame de gaz intercalaire (15) est disposée entre les deux substrats, un substrat (10) étant selon l'une quelconque des revendications 1 à 7.

9. Utilisation d'une couche absorbante (19) unique pour réaliser un vitrage multiple (100) comportant au moins deux substrats (10, 30) qui sont maintenus ensemble par une structure de châssis (90), ledit vitrage réalisant une séparation entre un espace extérieur (ES) et un espace intérieur (IS), dans lequel au moins une lame de gaz intercalaire (15) est disposée entre les deux substrats, un substrat (10) étant selon l'une quelconque des revendications 1 à 7, afin que ledit vitrage (100) présente une sélectivité s > 1,45 tout en ayant une transmission lumineuse T_{L} > 55 %, voire afin que ledit vitrage (100) présente une sélectivité s ≥ 1,5 tout en ayant une transmission lumineuse T_{L} ≥ 57 %.

## Patentansprüche

1. Substrat (10), das auf einer Fläche (11) mit einer Stapelung von Dünnschichten (14) mit reflektierenden Eigenschaften im Infraroten und/oder in der Sonnenstrahlung beschichtet ist, umfassend eine einzelne metallische Funktionsschicht (140), besonders auf Basis von Silber oder einer silberhaltigen Metalllegierung, und zwei dielektrische Beschichtungen (120, 160), wobei die Beschichtungen jeweils mindestens eine dielektrische Schicht (122, 164) umfassen, wobei die Funktionsschicht (140) zwischen den zwei dielektrischen Beschichtungen (120, 160) angeordnet ist, wobei die Stapelung außerdem eine einzige absorbierende Schicht (19) umfasst, ***dadurch gekennzeichnet, dass*** die absorbierende Schicht (19) eine Metallschicht mit einer physikalischen Dicke zwischen 0,5 nm und 1,5 nm oder sogar zwischen 0,6 nm und 1,2 nm ist und sich direkt auf der Fläche (11) und direkt unter einer dielektrischen Schicht auf Nitridbasis befindet und keinen Sauerstoff umfasst.

2. Substrat (10) nach Anspruch 1, ***dadurch gekennzeichnet, dass*** die absorbierende Metallschicht (19) aus Titan besteht.

3. Substrat (10) nach Anspruch 1 oder 2, ***dadurch gekennzeichnet, dass*** die dielektrische Beschichtung (120), die zwischen der Fläche (11) und der metallischen Funktionsschicht (140) angeordnet ist, eine Hochindexschicht (126) aus einem Material mit einem Brechungsindex zwischen 2,3 und 2,7 umfasst, wobei diese Schicht vorzugsweise auf Basis von Oxid vorliegt.

4. Substrat (10) nach Anspruch 3, ***dadurch gekennzeichnet, dass*** die Hochindexschicht (126) eine physikalische Dicke zwischen 5 und 15 nm aufweist.

5. Substrat (10) nach einem der Ansprüche 1 bis 4, ***dadurch gekennzeichnet, dass*** die physikalische Dicke der dielektrischen Schicht auf Nitridbasis zwischen 10 und 20 nm liegt, wobei diese Schicht vorzugsweise auf Basis von Siliciumnitrid Si₃N₄ vorliegt.

6. Substrat (10) nach einem der Ansprüche 1 bis 5, ***dadurch gekennzeichnet, dass*** die Funktionsschicht (140) direkt auf einer Underblocking-Beschichtung (130) abgeschieden ist, die zwischen der Funktionsschicht (140) und der unter der Funktionsschicht liegenden dielektrischen Beschichtung (120) angeordnet ist, und/oder die Funktionsschicht (140) direkt unter einer Overblocking-Beschichtung (150) abgeschieden ist, die zwischen der Funktionsschicht (140) und der über der Funktionsschicht liegenden dielektrischen Beschichtung (160) angeordnet ist, ***und dadurch, dass*** die Underblocking-Beschichtung (130) und/oder die Overblocking-Beschichtung (150) eine dünne Schicht auf Basis von Nickel oder Titan mit einer physikalischen Dicke e' wie 0,2 nm ≤ e' ≤ 2,5 nm beinhaltet.

7. Substrat (10) nach einem der Ansprüche 1 bis 6, ***dadurch gekennzeichnet, dass*** die letzte, die am weitesten vom Substrat entfernte Schicht (168) der darüber liegenden dielektrischen Beschichtung (160) auf Basis von Oxid vorliegt, vorzugsweise unterstöchiometrisch abgeschieden ist und insbesondere auf Basis von Titanoxid (TiOₓ) oder auf Basis von Mischoxid aus Zink und Zinn (SnZnOₓ) vorliegt.

8. Mehrfachverglasung (100), die mindestens zwei Substrate (10, 30) umfasst, die durch eine Rahmenstruktur (90) zusammengehalten werden, wobei die Verglasung eine Trennung zwischen einem Außenraum (ES) und einem Innenraum (IS) herstellt, bei der mindestens ein Gaszwischenspalt (15) zwischen den zwei Substraten angeordnet ist, wobei ein Substrat (10) einem der Ansprüche 1 bis 7 entspricht.

9. Verwendung einer einzigen absorbierenden Schicht (19) zum Herstellen einer Mehrfachverglasung (100), die mindestens zwei Substrate (10, 30) umfasst, die durch eine Rahmenstruktur (90) zusammengehalten werden, wobei die Verglasung eine Trennung zwischen einem Außenraum (ES) und einem Innenraum (IS) herstellt, bei der mindestens ein Gaszwischenspalt (15) zwischen den zwei Substraten angeordnet ist, wobei ein Substrat (10) einem der Ansprüche 1 bis 7 entspricht, sodass die Verglasung (100) eine Selektivität s > 1,45 bei einer Lichtdurchlässigkeit T_{L} > 55 % aufweist oder sodass die Verglasung (100) sogar eine Selektivität s ≥ 1,5 bei einer Lichtdurchlässigkeit T_{L} ≥ 57 % aufweist.

## Claims

1. A substrate (10) coated on one face (11) with a multilayer of thin films (14) with reflective properties in the infrared and/or in the solar radiation band comprising a single functional metal layer (140), in particular of silver or of a metal alloy containing silver, and two dielectric coatings (120, 160), said coatings each comprising at least one dielectric layer (122, 164), said functional layer (140) being disposed between the two dielectric coatings (120, 160), said multilayer furthermore comprising a single absorbing layer (19), ***characterized in that*** said absorbing layer (19) is a metal layer having a physical thickness in the range between 0.5 nm and 1.5 nm, or even between 0.6 nm and 1.2 nm and is situated directly on said face (11) and directly under a dielectric layer of nitride not comprising any oxygen.

2. The substrate (10) as claimed in claim 1, ***characterized in that*** said metal absorbing layer (19) is a layer of titanium.

3. The substrate (10) as claimed in either of claims 1 and 2, ***characterized in that*** said dielectric coating (120) disposed between the face (11) and said functional metal layer (140) comprises a high index layer (126) of a material having a refractive index in the range between 2.3 and 2.7, this layer preferably being base on an oxide.

4. The substrate (10) as claimed in claim 3, ***characterized in that*** said high index layer (126) has a physical thickness in the range between 5 and 15 nm.

5. The substrate (10) as claimed in any one of claims 1 to 4, ***characterized in that*** the physical thickness of said dielectric layer of nitride is in the range between 10 and 20 nm, this layer being preferably a layer base on silicon nitride Si₃N₄.

6. The substrate (10) as claimed in any one of claims 1 to 5, ***characterized in that*** said functional layer (140) is deposited directly onto a barrier undercoating (130) disposed between the functional layer (140) and the dielectric coating (120) underlying the functional layer and/or said functional layer (140) is deposited directly under a barrier overcoating (150) disposed between the functional layer (140) and the dielectric coating (160) on top of the functional layer and ***in that*** the barrier undercoating (130) and/or the barrier overcoating (150) comprises a thin layer of nickel or of titanium having a physical thickness e' such that 0.2 nm ≤ e' ≤ 2.5 nm.

7. The substrate (10) as claimed in any one of claims 1 to 6, ***characterized in that*** the final layer (168) of the overlying dielectric coating (160), the layer furthest from the substrate, is an oxide, deposited preferably as under-stoichiometric, and notably is a layer based on titanium oxide (TiOₓ) or based on a mixed oxide of zinc and tin (SnZnOₓ).

8. A multiple glazing unit (100) comprising at least two substrates (10, 30) which are held together by a chassis structure (90), said glazing unit forming a separation between an external space (ES) and an internal space (IS), in which at least one gas separation layer (15) is disposed between the two substrates, a substrate (10) being as claimed in any one of claims 1 to 7.

9. A use of a single absorbing layer (19) for a multiple glazing unit (100) comprising at least two substrates (10, 30) which are held together by a chassis structure (90), said glazing unit forming a separation between an external space (ES) and an internal space (IS), in which at least one gas separation layer (15) is disposed between the two substrates, a substrate (10) being as claimed in any one of claims 1 to 7, in order for said glazing unit (100) to exhibit a selectivity s > 1.45 while at the same time having a light transmission T_{L} > 55%, or even in order for said glazing unit (100) to exhibit a selectivity s ≥ 1.5 while at the same time having a light transmission T_{L} ≥ 57%.
